# EUROPEAN PATENT APPLICATION

(11) **EP 4 836 341 A1**
(43) Date of publication of application: **04.11.2026**
(21) Application number: 24916814.7
(22) Date of filing: 31.12.2024
(51) Int. Cl.: H04L 5/00, H04W 4/30

(54) **MEASUREMENT METHOD AND RELATED APPARATUS**

(30) Priority: 12.01.2024 CN 202410054120
(71) Applicant: Huawei Technologies Co., Ltd., Shenzhen, Guangdong 518129 (CN)
(72) Inventor: LI, Cheng, Shenzhen, Guangdong 518129 (CN); HUANG, Su, Shenzhen, Guangdong 518129 (CN)
(74) Representative: Huawei European IPR
(86) International application number: PCT/CN2024/144677
(87) International publication number: WO 2025/148767

(57) **Abstract**

A measurement method and a related apparatus are provided. The method includes: a first network element sending a measurement request, where the measurement request is used to request measurement of a target, and the measurement request includes information about the target. Correspondingly, a measurement apparatus receives the measurement request and performs measurement on the target based on the information about the target. In other words, the measurement apparatus can determine which target to measure, and further completes the measurement on the target based on the information about the target included in the measurement request, thereby providing a method for measuring a known (or a specific) target. Additionally, for the first network element, the target to be measured can be flexibly specified.

## Description

This application claims priority to Chinese Patent Application No. 202410054120.3, filed with the State Intellectual Property Office of China on January 12, 2024, and entitled "A Measurement Method and Related Device", which is incorporated herein by reference in its entirety.

### TECHNICAL FIELD

This application relates to the communications field, and in particular, to a measurement method and a related apparatus.

### BACKGROUND

Deformation detection is widely used in many fields, such as industrial safety, bridge/dam safety, construction, and the like. Through deformation detection, potential safety issues can be identified in a timely manner, thereby enabling maintenance and preventing safety accidents. Deformation detection involves obtaining changes of a target by performing long-term measurements on a specific target. It can be seen that how to measure a specific target is crucial in the deformation detection process.

Therefore, there is an urgent need to provide a method that can complete the measurement of a specific target.

### SUMMARY

This application provides a measurement method and a related apparatus, to complete the measurement of a specific target.

According to a first aspect, this application provides a measurement method. The method may be performed by a measurement apparatus, or by a component (such as a chip or a chip system) in the measurement apparatus, or may be performed by a logical module or software capable of implementing all or a part of the functions of the measurement apparatus. This is not limited in this application.

For example, the method includes: receiving a measurement request from a first network element, where the measurement request is used to request measurement of a target, and the measurement request includes information about the target; and measuring the target based on the information about the target.

In this application, the first network element may be a network element configured to provide a sensing/measurement/detection/positioning function. The first network element may be deployed on an access network side, or may be deployed on a core network side, which is not limited in this application. The first network element may be, for example, a location management function (location management function, LMF) network element, a sensing management function (sensing management function, SMF) network element, or the like. A specific type of the first network element is not limited in this application.

In this application, the aforementioned target may be a passive target, where a passive target refers to an object that cannot actively transmit signals, such as a bridge, a gasoline tank, and the like. The aforementioned target may also be an active target, where an active target refers to an object that can actively transmit signals, such as a mobile phone, a computer, and the like. When the aforementioned target is an active target, the measurement device's measurement of the target does not rely on the signal actively sent by the target, in other words, the signal used to measure the target is not sent by the target itself.

In the aforementioned technical solution, the measurement device may receive a measurement request from the first network element, where the measurement request is used to request measurement of a target. In other words, the measurement device can determine which target to measure, and further complete the measurement of the target based on the information about the target included in the measurement request, thereby providing a method for measuring a known (or a specific) target. Additionally, for the first network element, it can flexibly specify which target to measure.

With reference to the first aspect, in some possible implementations of the first aspect, the information about the target includes information indicating an identifier of the target.

The identifier of the target mentioned above is used to identify the target, and different identifiers can be used to distinguish different targets. On one hand, the identifier of the target can be used to distinguish the measurement results corresponding to different targets when the measurement device reports the measurement results to the first network element. On the other hand, when the position of the target does not change, the first network element may directly indicate the identifier of the target to the measurement device in the next instance, without indicating specific information of the target, such as the position of the target or the distance between the target and the measurement device, thereby helping to reduce signaling overhead.

It can be understood that when the position of the target does not change, and the first network element directly indicates the identifier of the target to the measurement device the next time, the measurement device may determine information about the target corresponding to the target based on the identifier of the target, such as the position of the target, the distance between the target and the measurement device, the orientation of the target, and the like.

With reference to the first aspect, in some possible implementations of the first aspect, the information about the target further includes one or more of the following: information indicating a location of the target; information indicating an orientation or an angle of the target; information indicating a beam direction of a reference signal, where the reference signal is used to measure the target; or information indicating a distance between the target and the measurement apparatus.

The information indicating the location of the target may be, for example, location coordinates of the target, where the location coordinates of the target may be absolute location coordinates or relative location coordinates of the target. This is not limited in this application.

The orientation of the target may be an absolute orientation or a relative orientation. For example, the absolute orientation may be an orientation of the target relative to an orientation of the measurement apparatus, and the relative orientation may be an orientation of the target (denoted as target 1) relative to an orientation of another target (denoted as target 2). This is not limited in this application.

The angle of the target may be an angle of the target relative to a reference direction, or an angle between a line connecting the target and the measurement apparatus and the reference direction.

The distance between the aforementioned target and the measurement device may be an absolute distance or a relative distance. The absolute distance may, for example, be a distance value or a distance range between the target and the measurement device. The relative distance may, for example, be a distance between the target and the measurement device relative to a reference distance, where the reference distance may, for example, be the distance between the measurement device and another target.

By using the information indicating the target, the first network element facilitates the measurement device in determining the beam direction for transmitting the reference signal, thereby enabling the measurement device to send the reference signal in that beam direction to complete the measurement of the target. In this way, even if the position of the target changes, the measurement device can still know the beam direction for transmitting the reference signal to complete the measurement of the target.

Optionally, the information about the target may include one or more of the following: information indicating an identifier of the target, information indicating a location of the target; information indicating an orientation or an angle of the target; information indicating a beam direction of a reference signal, where the reference signal is used to measure the target; or information indicating a distance between the target and the measurement device.

In other words, the information about the aforementioned target may also include one or more of the following: information indicating the location of the target; information indicating the orientation or angle of the target; information indicating the beam direction of a reference signal, where the reference signal is used to measure the target; or information indicating the distance between the target and the measuring device, but does not include information indicating the identifier of the target. In this way, the measuring device may also determine the corresponding target based on the information about the aforementioned target.

With reference to the first aspect, in some possible implementations of the first aspect, the method further includes: sending a first message to the first network element, where the first message indicates one or more of the following: whether the measurement apparatus has a measurement capability, whether the measurement apparatus has a deformation detection capability, a location of the measurement apparatus, a direction of an antenna panel of the measurement apparatus, or a quantity of antenna elements of the measurement apparatus.

Among them, the first message may be actively reported by the measurement apparatus, or may be requested to be reported by the first network element, which is not limited in this application.

The capability of whether the measurement device has the ability to measure may be used by the first network element to determine whether to select the measurement device to perform measurement on the target; the capability of whether the measurement device has the ability to detect deformation may be used by the first network element to determine whether to select the measurement device to perform deformation detection; the location of the measurement device may be used by the first network element to determine which measurement device to select for measurement based on the location of the target and the location of the measurement device. The direction of the antenna panel of the measurement device may be used by the first network element to determine which measurement device to select for measurement based on the direction of the target and the direction of the antenna panel. In addition, the first network element may also determine the measurement device used to measure the target based on the number of antenna elements, for example, the first network element may select a measurement device with a larger number of antenna elements to perform measurement on the target.

With reference to the first aspect, in some possible implementations of the first aspect, the method further includes: receiving a second message from the first network element, where the second message is used to request configuration information for a reference signal resource, the reference signal resource is used to transmit a reference signal, and the reference signal is used to measure the target; and sending the configuration information to the first network element.

The aforementioned configuration information may be used to configure one or more of the following: a time domain resource, a frequency domain resource, or a spatial domain resource, etc. For example, the configuration information includes the period of the reference signal, one or more beam directions, or at least one time-frequency resource. The beam direction indicated by the first network element for transmitting the reference signal, as mentioned above, may be a subset of the one or more beam directions mentioned above. In other words, the first network element may select, from the one or more beam directions reported by the measurement device, the beam direction to be used for measuring the target, and then indicate this to the measurement device.

With reference to the first aspect, in some possible implementations of the first aspect, the method further includes: sending a measurement result to the first network element, where the measurement result is obtained by measuring the target, and the measurement result includes one or more of the following: an identifier of the target, time measurement information, angle measurement information, energy measurement information, or phase measurement information.

The time measurement information includes but is not limited to: time of arrival (TOA), time difference of arrival (TDOA), round trip time (RTT), or reference signal time difference (RSTD). The angle measurement information includes but is not limited to: angle of departure (AOD) or angle of arrival (AOA). The energy measurement information includes but is not limited to: received signal strength (RSS). The phase measurement information includes but is not limited to: the phase or phase difference of the reference signal.

According to a second aspect, this application provides a measurement method, which may be performed by a first network element, or may be performed by a component (such as a chip, a chip system, or the like) configured in the first network element, or may be implemented by a logical module or software capable of realizing all or a part of the functions of the first network element. This is not limited in this application.

For example, the method includes: generating a measurement request, where the measurement request is used to request measurement of a target, and the measurement request includes information about the target; and sending the measurement request to a measurement device.

In the aforementioned technical solution, the first network element may send a measurement request to the measurement apparatus to request measurement of a specific (or known) target, thereby providing a method for measuring a known (or specific) target. In other words, the first network element can flexibly specify which target to measure.

With reference to the second aspect, in some possible implementations of the second aspect, the information about the target includes information indicating an identifier of the target.

The identifier of the aforementioned target is used to identify the target, and different identifiers can be used to distinguish between different targets. On one hand, the identifier of the aforementioned target can be used to differentiate between measurement results corresponding to different targets when the measurement device reports the measurement results to the first network element. On the other hand, when the position of the target does not change, the first network element can directly indicate the identifier of the target to the measurement device in the next instance, without indicating specific information about the target, such as its location or the distance between the target and the measurement device, thereby helping to reduce signaling overhead.

It can be understood that when the position of the target does not change, and the first network element directly indicates the identifier of the target to the measurement device the next time, the measurement device can determine information about the target corresponding to the target based on the identifier of the target, such as the target's location, the distance between the target and the measurement device, the orientation of the target, and so on.

With reference to the second aspect, in some possible implementations of the second aspect, the information about the target further includes one or more of the following: information indicating the location of the target; information indicating the orientation or angle of the target; information indicating the beam direction of a reference signal, where the reference signal is used to measure the target; or information indicating the distance between the target and the measurement device.

The information indicating the location of the target may be, for example, location coordinates of the target, where the location coordinates of the target may be absolute location coordinates or relative location coordinates of the target. This is not limited in this application.

The orientation of the target may be an absolute orientation or a relative orientation. For example, the absolute orientation may be an orientation of the target relative to an orientation of the measurement apparatus, and the relative orientation may be an orientation of the target (denoted as target 1) relative to an orientation of another target (denoted as target 2). This is not limited in this application.

The angle of the target may be an angle of the target relative to a reference direction, or an angle between a line connecting the target and the measurement apparatus and the reference direction.

The distance between the target and the measurement apparatus may be an absolute distance or a relative distance. The absolute distance may be, for example, a distance value or a distance range between the target and the measurement apparatus. The relative distance may be, for example, a distance between the target and the measurement apparatus relative to a reference distance, where the reference distance may be, for example, a distance between the measurement apparatus and another target.

By using the information indicating the target, the first network element facilitates the measurement device in determining the beam direction for transmitting the reference signal, and then sending the reference signal in that beam direction to complete the measurement of the target. In this way, even if the position of the target changes, the measurement device can still know the beam direction for sending the reference signal to complete the measurement of the target.

Optionally, the information about the target may include one or more of the following: information indicating an identifier of the target, information indicating a location of the target; information indicating an orientation or angle of the target; information indicating a beam direction of a reference signal, where the reference signal is used to measure the target; or information indicating a distance between the target and the measurement device.

In other words, the information about the target may also include one or more of the following: information indicating the location of the target; information indicating the orientation or angle of the target; information indicating the beam direction of a reference signal, where the reference signal is used to measure the target; or information indicating the distance between the target and the measurement device, without including information indicating an identifier of the target. In this way, the measurement device can also determine the corresponding target based on the information about the target.

With reference to the second aspect, in some possible implementations of the second aspect, the method further includes: receiving a first message, where the first message indicates one or more of the following: whether the capability of measurement is available, whether the capability of deformation detection is available, a location of the measurement device, a direction of an antenna panel of the measurement device, or a quantity of antenna elements of the measurement device.

The capability of measurement may be used by the first network element to determine whether to select the measurement device for measuring the target; the capability of deformation detection may be used by the first network element to determine whether to select the measurement device for performing deformation detection; the location of the measurement device may be used by the first network element to determine which measurement device to select for measurement based on the location of the target and the location of the measurement device. The direction of the antenna panel of the measurement device may be used by the first network element to determine which measurement device to select for measurement based on the direction of the target and the direction of the antenna panel. In addition, the first network element may also determine the measurement device used for measuring the target based on the quantity of antenna elements, for example, the first network element may select a measurement device with a larger quantity of antenna elements to measure the target.

With reference to the second aspect, in some possible implementations of the second aspect, the method further includes: sending a second message, where the second message is used to request configuration information of a reference signal resource, the reference signal resource is used to transmit a reference signal, and the reference signal is used to measure the target; and receiving the configuration information.

With reference to the second aspect, in some possible implementations of the second aspect, the method further includes: receiving a measurement result, where the measurement result is obtained by measuring the target, and the measurement result includes one or more of the following: an identifier of the target, time measurement information, angle measurement information, energy measurement information, or phase measurement information; and performing a deformation calculation on the target based on the measurement result.

The time measurement information includes but is not limited to: TOA, TDOA, RTT, or RSTD. The angle measurement information includes but is not limited to: an AOD or an AOA. The energy measurement information includes but is not limited to: RSS. The phase measurement information includes but is not limited to: a phase or a phase difference of the reference signal.

It can be understood that the deformation calculation performed by the first network element on the target based on the measurement results can be understood as the first network element performing the deformation calculation on the target based on the measurement results reported multiple times by the measurement device. In other words, the first network element can perform the deformation calculation on the target based on the measurement results of the target at different time points.

It can be understood that the method described in the first aspect and any one of the possible implementations of the first aspect may be applied to a single-station sensing scenario, that is, the device that sends the reference signal and the device that receives the echo signal are the same device, where the echo signal is a signal reflected by the target after the reference signal reaches the target. The methods described in the third aspect to the fourth aspect and any one of the possible implementations of the third aspect to the fourth aspect may be applied to a dual-station sensing scenario, that is, the device that sends the reference signal and the device that receives the echo signal are different devices.

According to a third aspect, this application provides a measurement method. The method may be performed by a first measurement apparatus, or may be performed by a component (such as a chip or a chip system) in the first measurement apparatus, or may be performed by a logic module or software that can implement all or a part of the functions of the first measurement apparatus. This is not limited in this application.

For example, the method includes: receiving a measurement request from a first network element, where the measurement request is used to request measurement of a target, and the measurement request includes information about the target; and performing measurement on the target based on the information about the target.

Among them, the first measurement device may be an apparatus that receives an echo signal, where the echo signal is a signal reflected by the target after the reference signal reaches the target. The first measurement device may be, for example, a terminal or a network device, which is not limited in this application.

In the aforementioned technical solution, the first measurement apparatus may receive a measurement request from a first network element, where the measurement request is used to request measurement of a target. In other words, the first measurement apparatus may determine which target to measure, thereby providing a method for measuring a known (or specific) target. Additionally, for the first network element, it facilitates flexible specification of which target to measure.

With reference to the third aspect, in some possible implementations of the third aspect, the information about the target includes information indicating an identifier of the target.

With reference to the third aspect, in some possible implementations of the third aspect, the information about the target further includes one or more of the following: information indicating a location of the target; information indicating an orientation or an angle of the target; information indicating a beam direction of a reference signal, where the reference signal is used to measure the target; or information indicating a distance between the target and a second measurement apparatus and a distance between the target and a first measurement apparatus, where the second measurement apparatus is a sender of the reference signal.

Optionally, the information about the target may include one or more of the following: information indicating an identifier of the target; information indicating a location of the target; information indicating an orientation or an angle of the target; information indicating a beam direction of a reference signal, where the reference signal is used to measure the target; or information indicating a distance between the target and a second measurement apparatus and a distance between the target and a first measurement apparatus.

In other words, the information about the target may further include one or more of the following: information indicating a location of the target; information indicating an orientation or an angle of the target; information indicating a beam direction of a reference signal, where the reference signal is used to measure the target; or information indicating a distance between the target and a second measurement apparatus and a distance between the target and a first measurement apparatus, without including information indicating an identifier of the target. In this way, the measurement apparatus may also determine the corresponding target based on the information about the target.

With reference to the third aspect, in some possible implementations of the third aspect, the method further includes: sending a first message to the first network element, where the first message indicates one or more of the following: whether the first measurement apparatus has a measurement capability, whether the first measurement apparatus has a deformation detection capability, a location of the first measurement apparatus, a direction of an antenna panel of the first measurement apparatus, or a quantity of antenna elements of the first measurement apparatus.

With reference to the third aspect, in some possible implementations of the third aspect, the method further includes: sending a measurement result to the first network element, where the measurement result is obtained by measuring the target, and the measurement result includes one or more of the following: an identifier of the target, time measurement information, angle measurement information, energy measurement information, or phase measurement information.

The time measurement information includes but is not limited to: TOA, TDOA, RTT, or RSTD. The angle measurement information includes but is not limited to: AOD or AOA. The energy measurement information includes but is not limited to: RSS. The phase measurement information includes but is not limited to: the phase of a reference signal or a phase difference.

According to a fourth aspect, this application provides a measurement method. The method may be performed by a second measurement apparatus, or may be performed by a component (such as a chip or a chip system) in the second measurement apparatus, or may be performed by a logical module or software capable of implementing all or a part of the functions of the second measurement apparatus. This is not limited in this application.

For example, the method includes: receiving a second message from a first network element, where the second message is used to request configuration information for a reference signal resource, the reference signal resource is used to transmit a reference signal, and the reference signal is used to measure a target; and sending the configuration information to the first network element.

The second measurement apparatus may be an apparatus that sends a reference signal, where the reference signal is used to measure a target. For example, the second measurement apparatus may be a network device, and a specific type of the second measurement apparatus is not limited in this application.

In the foregoing technical solution, the second measurement apparatus may report the configuration information to the first network element, so that the first network element can determine, based on the configuration information reported by the second measurement apparatus, whether to select the second measurement apparatus to perform measurement on a target.

With reference to the fourth aspect, in some possible implementations of the fourth aspect, before receiving the second message from the first network element, the method further includes: sending a third message to the first network element, where the third message indicates one or more of the following: whether the capability of measurement is available, whether the capability of deformation detection is available, the location of the second measurement device, the direction of the antenna panel of the second measurement device, or the number of antenna elements of the second measurement device.

With reference to the fourth aspect, in some possible implementations of the fourth aspect, after the configuration information is sent to the first network element, the method further includes: receiving a measurement request from the first network element, where the measurement request is used to request measurement on a target, and the measurement request includes information about the target; and sending a reference signal based on the information about the target.

It can be understood that the second measurement apparatus may also receive a measurement request from the first network element to determine which target to measure. For example, based on the measurement request, the second measurement apparatus may determine the beam direction for transmitting the reference signal. Alternatively, the second measurement apparatus may not receive a measurement request from the first network element. In this case, the second measurement apparatus may transmit an omnidirectional reference signal.

With reference to the fourth aspect, in some possible implementations of the fourth aspect, the information about the target includes information indicating an identifier of the target.

With reference to the fourth aspect, in some possible implementations of the fourth aspect, the information about the target further includes one or more of the following: information indicating a location of the target; information indicating an orientation or an angle of the target; or information indicating a beam direction of a reference signal, where the reference signal is used to measure the target; or information indicating a distance between the target and the second measurement apparatus and a distance between the target and the first measurement apparatus.

Optionally, the information about the target may include one or more of the following: information indicating an identifier of the target; information indicating a location of the target; information indicating an orientation or an angle of the target; information indicating a beam direction of a reference signal, where the reference signal is used to measure the target; or information indicating a distance between the target and the measurement apparatus.

In other words, the information about the target may also include one or more of the following: information indicating a location of the target; information indicating an orientation or an angle of the target; information indicating a beam direction of a reference signal, where the reference signal is used to measure the target; or information indicating a distance between the target and the second measurement apparatus and a distance between the target and the first measurement apparatus, without including information indicating an identifier of the target. In this way, the measurement apparatus may also determine the corresponding target based on the information about the target.

According to a fifth aspect, this application provides a signal transmission method. The method may be performed by a network device, or may be performed by a component (such as a chip or a chip system) in the network device, or may be performed by a logical module or software capable of implementing all or a part of the functions of the network device. This is not limited in this application.

For example, the method includes: receiving a fourth message from a first network element, where the fourth message is used to request configuration of a reference signal, the fourth message includes information about a target, and the information about the target indicates a beam direction of the reference signal; and transmitting a reference signal.

Wherein, the fourth message mentioned above, which is used to request the configuration of a reference signal, may alternatively be replaced with the fourth message being used to request the configuration information of the reference signal.

The method may be applied to a single-station sensing scenario, where a network device senses/measure a target, the network device sends a reference signal, and an echo signal is received. The method may also be applied to a dual-station sensing scenario, where a network device sends a reference signal, and another network device or terminal receives the echo signal.

In the aforementioned technical solution, the fourth message used to request the configuration of a reference signal may include information about the target, that is, while requesting the configuration of the reference signal, the first network element indicates the information about the target to the network device, so that the network device can measure the target. Moreover, compared to an additional request for measuring the target, such as sending a measurement request, this approach helps reduce signaling overhead.

According to a sixth aspect, this application provides a signal transmission method. The method may be performed by a network device, or may be performed by a component (such as a chip or a chip system) in the network device, or may be performed by a logical module or software that can implement all or a part of the functions of the network device. This is not limited in this application.

For example, the method includes: receiving a fourth message from a first network element, where the fourth message is used to request configuration of a reference signal, and the fourth message includes information about a target, where the information about the target indicates a beam direction of the reference signal; and sending a fifth message to a terminal, where the fifth message is used to configure the reference signal.

In the above, the fourth message mentioned for requesting the configuration of a reference signal may alternatively be replaced with the fourth message being used to request configuration information of the reference signal.

This method can be applied to a single-station sensing scenario, where the terminal senses/measure the target, that is, the terminal sends a reference signal and receives an echo signal. This method can also be applied to a dual-station sensing scenario, where the terminal sends a reference signal, and another network device or terminal receives the echo signal.

In the aforementioned technical solution, the fourth message used to request the configuration of a reference signal may include information about the target, that is, while requesting the configuration of the reference signal, the first network element indicates the information about the target to the network device at the same time. This approach is advantageous in reducing signaling overhead compared to an additional request for measuring the target, such as sending a measurement request.

According to a seventh aspect, this application provides a measurement apparatus that can implement the method according to any one of the first aspect to the fourth aspect or the possible implementations of the first aspect to the fourth aspect. The apparatus includes corresponding modules configured to perform the foregoing method. The modules included in the apparatus may be implemented by software and/or hardware.

According to an eighth aspect, this application provides a measurement apparatus. The apparatus includes a processor, where the processor may be configured to execute a computer program in a memory, to implement the method according to any one of the first aspect to the fourth aspect or any one of the possible implementations of the first aspect to the fourth aspect.

Optionally, the apparatus further includes a communication interface, and the processor is coupled to the communication interface. The communication interface is configured to receive a signal from another apparatus other than the apparatus and transmit the signal to the processor, or send a signal from the processor to another apparatus other than the apparatus. For example, the communication interface may be a transceiver, a circuit, a bus, a module, a pin, or another type of communication interface.

Optionally, the apparatus further includes a memory, and the processor is coupled to the memory. The memory is configured to store program instructions and data. The memory is coupled to the processor, and when the processor executes the instructions stored in the memory, the method according to any one of the foregoing aspects may be implemented.

According to a ninth aspect, this application provides a signal transmission apparatus, which can implement the method according to the fifth aspect or the sixth aspect. The apparatus includes corresponding modules configured to perform the foregoing method. The modules included in the apparatus may be implemented by software and/or hardware.

According to a tenth aspect, this application provides a signal transmission apparatus, where the apparatus includes a processor, and the processor is configured to execute a computer program in a memory, to implement the method according to the fifth aspect or the sixth aspect.

Optionally, the apparatus further includes a communication interface, and the processor is coupled to the communication interface. The communication interface is configured to receive a signal from another apparatus other than the apparatus and transmit the signal to the processor, or send a signal from the processor to another apparatus other than the apparatus. For example, the communication interface may be a transceiver, a circuit, a bus, a module, a pin, or another type of communication interface.

Optionally, the apparatus further includes a memory, and the processor is coupled to the memory. The memory is configured to store program instructions and data. The memory is coupled to the processor, and when the processor executes the instructions stored in the memory, the method according to the foregoing aspects may be implemented.

According to an eleventh aspect, this application provides a computer-readable storage medium, where the computer-readable storage medium stores a computer program or instructions, and when the computer program or the instructions is/are executed, the method according to any one of the first aspect to the sixth aspect and the possible implementations of the first aspect to the sixth aspect is/are implemented.

According to a twelfth aspect, this application provides a computer program product, where the computer program product includes an instruction, and when the instruction is run, the method according to any one of the first aspect to the sixth aspect and the possible implementations of the first aspect to the sixth aspect is implemented.

According to a thirteenth aspect, this application provides a chip system, where the chip system includes at least one processor, configured to support implementation of the functions described in any one of the first aspect to the sixth aspect and the possible implementations of the first aspect to the sixth aspect, for example, receiving or processing the data involved in the foregoing method.

In a possible design, the chip system further includes a memory, where the memory is configured to store program instructions and data, and the memory is located inside or outside the processor.

The chip system may include a chip, or may include a chip and another discrete component.

According to a fourteenth aspect, this application provides a communications system. The measurement system includes a first measurement apparatus and a second measurement apparatus. The first measurement apparatus is configured to implement the method according to any one of the third aspect or the possible implementations of the third aspect, and the second measurement apparatus is configured to implement the method according to any one of the fourth aspect or the possible implementations of the fourth aspect.

It should be understood that the third aspect to the fourteenth aspect of this application correspond to the technical solutions of the first aspect and the second aspect of this application, and beneficial effects achieved in the aspects and the corresponding feasible implementations are similar, and details are not described again.

### BRIEF DESCRIPTION OF THE DRAWINGS

FIG. 1 is a schematic architectural diagram of a communications system applicable to a measurement method according to an embodiment of this application;
FIG. 2 is a schematic diagram of a sensing mode according to an embodiment of this application;
FIG. 3 is a schematic flowchart of a measurement method according to an embodiment of this application;
FIG. 4 is another schematic flowchart of a measurement method according to an embodiment of this application;
FIG. 5 is a schematic flowchart of a signal transmission method according to an embodiment of this application;
FIG. 6 is another schematic flowchart of a signal transmission method according to an embodiment of this application;
FIG. 7 is a schematic block diagram of an apparatus according to an embodiment of this application;
FIG. 8 is another schematic block diagram of an apparatus according to an embodiment of this application.

### DETAILED DESCRIPTION OF EMBODIMENTS

The technical solutions in this application are described below with reference to the accompanying drawings.

For ease of understanding the technical solutions provided in this application, the following provides several descriptions first:
First, in this application, the terms "include" and "have" and any other variants thereof are intended to cover a non-exclusive inclusion. For example, an apparatus, system, product, or device that includes a series of modules, units, or units is not necessarily limited to those modules, units, or units that are explicitly listed, but may include other modules, units, or units that are not explicitly listed or that are inherent to these apparatuses, systems, products, or devices.
Second, in this application, indication includes an explicit indication (also referred to as a direct indication) and an implicit indication (also referred to as an indirect indication). The explicit indication of the information A means that the information A is included; and the implicit indication of the information A means that the information A is indicated by using a correspondence between the information A and the information B and by directly indicating the information B. The correspondence between the information A and the information B may be predefined, prestored, pre-burned, or preconfigured. Alternatively, the information A may be indicated by using the information B and a preset rule.
Third, in this application, that information C is used for determining information D includes both a case where information D is determined based only on information C, and a case where information D is determined based on information C and other information. In addition, that information C is used for determining information D may also include an indirect determination case, for example, a case where information D is determined based on information E, and information E is determined based on information C.
Fourth, in this application, "at least one" means one or more, and "a plurality of" means two or more. The term "and/or" describes an association relationship between associated objects, and indicates that three relationships may exist. For example, A and/or B may indicate the following three cases: only A exists, both A and B exist, or only B exists, where A and B may be singular or plural. The character "/" generally indicates an "or" relationship between the associated objects, but does not preclude the possibility that the associated objects may have an "and" relationship. The specific meaning may be understood in combination with the context. "At least one of the following" or a similar expression thereof refers to any combination of these items, including any combination of a single item or a plurality of items. For example, "at least one of a, b, or c" may indicate: a, b, c; a and b; a and c; b and c; or a, b, and c, where a, b, and c may be singular or multiple.
Fifth, in this application, the use of prefixes such as "first" and "second" is merely intended to facilitate distinguishing and describing different things that belong to the same name category, and does not impose any limitation on an order, size, or quantity of the things. For example, "first measurement apparatus" and "second measurement apparatus" are merely different measurement apparatuses, and there is no time sequence relationship, size relationship, or priority relationship between them.
Sixth, in this application, "sending" and "receiving" indicate a direction of signal transmission. For example, "sending information to a network device" may be understood as that an intended destination of the information is the network device, and may include directly sending the information through an air interface, or may include indirectly sending the information through an air interface by another unit or module. "Receiving information from a terminal" may be understood as that a source of the information is the terminal, and may include directly receiving the information from the terminal through an air interface, or may include indirectly receiving the information from the terminal through an air interface from another unit or module. "Sending" may also be understood as "output" of a chip interface, and "receiving" may also be understood as "input" of a chip interface.

In other words, sending and receiving may be performed between devices, for example, between a network device and a terminal; or may be performed within a device, for example, sending or receiving between components, modules, chips, software modules, or hardware modules within the device through a bus, a wire, or an interface.

Seventh, in this application, "when" and "if" mean that an apparatus performs corresponding processing under an objective condition, and do not limit time, and do not require that an apparatus necessarily perform a determining action when implementing these, nor does it mean that there are other limitations.

Eighth, terms such as "example", "for example", "for instance", or "such as" used in this application are used to indicate an example, an illustration, or a description. Any embodiment or design scheme described as "an example", "for example", "for instance", or "such as" in this application should not be construed as being more preferred or having more advantages than another embodiment or design scheme. To be precise, the use of the terms such as "example", "for example", "for instance", or "such as" is intended to present a related concept in a specific manner.

Ninth, in this application, preconfiguration may be understood as presetting, predefining, defining, predefining, storing, pre-storing, pre-negotiating, pre-forming, or pre-setting, or the like.

Tenth, the technical solutions provided in this application may be applied to various communications systems, for example, a long term evolution (long term evolution, LTE) system, an LTE frequency division duplex (frequency division duplex, FDD) system, an LTE time division duplex (time division duplex, TDD) system, a sidelink (sidelink, SL) communications system, a universal mobile telecommunication system (universal mobile telecommunication system, UMTS), a worldwide interoperability for microwave access (worldwide interoperability for microwave access, WiMAX) communications system, a 5th generation (5th generation, 5G) mobile communications system, or a new radio access technology (new radio access technology, NR) system. The 5G mobile communications system may include a non-standalone (non-standalone, NSA) network and/or a standalone (standalone, SA) network. The technical solutions provided in this application may also be applied to future communications systems, such as a 6th generation (6th generation, 6G) mobile communications system. This is not limited in this application.

Eleventh, in this application, the measurement apparatus may be a network device or a terminal. The network device may be any device having a wireless transceiver function. The network device includes but is not limited to: an evolved NodeB (evolved Node B, eNB), a radio network controller (radio network controller, RNC), a NodeB (Node B, NB), a base station controller (base station controller, BSC), a base transceiver station (base transceiver station, BTS), a home evolved NodeB (home evolved Node B, or home Node B, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP), or may be a gNB or a transmission point (TRP or TP) in a 5G (for example, NR) system, or may be one or a group (including a plurality of antenna panels) of antenna panels of a base station in a 5G system, or may be a network node, such as a baseband unit (BBU) or a distributed unit (distributed unit, DU), that forms a gNB or a transmission point. Alternatively, the network device may be a radio controller in a cloud radio access network (cloud radio access network, CRAN) scenario.

In this application, the terminal may also be referred to as a terminal device, user equipment (user equipment, UE), a mobile station, a mobile terminal, or the like. The terminal may include but is not limited to a mobile phone (mobile phone), a tablet computer (pad), a computer with a wireless transceiver function, a virtual reality (virtual reality, VR) device, an augmented reality (augmented reality, AR) device, a mixed reality (mixed reality, MR) device, an extended reality (extended reality, XR) device, a wireless terminal in industrial control (industrial control), a vehicle-mounted device, a wireless terminal in autonomous driving, a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a wearable device, a video player, a head-mounted display (HMD), or the like. A specific form of the terminal is not limited in this application.

Deformation detection involves obtaining changes in a specific target through long-term measurements of the target. Deformation detection is widely used in various fields, such as industrial safety, bridge/dam safety, construction, and more. Through deformation detection, potential safety issues can be identified in a timely manner, allowing for maintenance and preventing safety accidents. It can be seen that how to measure a specific target during the deformation detection process is of great importance. Currently, network devices or terminals can only sense an unknown object; for example, a network device or terminal does not know whether an object exists in a certain direction. Therefore, a reference signal is sent in that direction to determine whether an object (or target) exists in that direction.

In this application, a measurement method is provided, which can measure a specific target to thereby complete deformation detection. For example, the measurement apparatus may receive a measurement request from a first network element, where the measurement request is used to request measurement of a target. In other words, the measurement apparatus may determine which target to measure, and further complete the measurement of the target based on the information about the target included in the measurement request.

Before the measurement method provided in this application is described in detail, the following first provides a detailed description of a communications system to which this application is applicable.

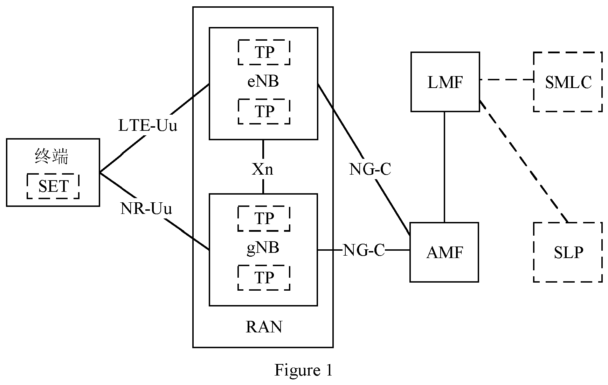

FIG. 1 is a schematic architectural diagram of a communications system applicable to the measurement method provided in this application.

The communications system includes a terminal, a radio access network (radio access network, RAN), and a core network. The terminal may be connected to a radio access network device in a wireless manner, and the radio access network device may be connected to the core network in a wireless or wired manner. The core network device and the radio access network device may be independent and different physical devices, or functions of the core network device and logical functions of the radio access network device may be integrated into a same physical device, or some functions of the core network device and some functions of the radio access network device may be integrated into a same physical device. The terminal and the terminal, and the radio access network device and the radio access network device may be connected to each other in a wired or wireless manner.

For example, as shown in FIG. 1, the radio access network device is illustrated using an eNB and a gNB as examples. The terminal and the eNB may communicate with each other through an LTE-Uu interface, the terminal and the gNB may communicate with each other through an NR-Uu interface, and the eNB and the gNB may communicate with each other through an Xn interface. The eNB and the gNB may also be referred to as a TP (Transmission Point), or the like, and the names thereof are not limited in this application. The terminal may be, for example, a secure user plane location enabled terminal (SET).

The LMF network element is a network element (or referred to as a module or component) in the NR core network that is used to provide positioning functions. The access and mobility management function (access and mobility management function, AMF) network element is a network element in the NR core network that is used to provide access management functions. For example, the AMF network element may be configured to receive a positioning service request initiated by another network element in the network for a certain terminal, and send the received request to the LMF network element. The LMF network element is responsible for processing the received positioning request and initiating a related positioning procedure. The enhanced serving mobile location center (enhanced serving mobile location center, E-SMLC) is a network element in the 4G core network that is used to provide positioning functions. The secure user plane location protocol (secure user plane location protocol, SLP) network element is a network element in the 4G core network that is used to process the secure user plane location protocol. The access network device may communicate with the first network element through an NG-C interface.

It should be understood that Figure 1 is merely a schematic diagram, and the communication system may further include other network elements. For example, the core network may further include an SMF network element, which may be configured to indicate information of a target to be measured to the terminal, such as an identifier of the target, a location of the target, and the like.

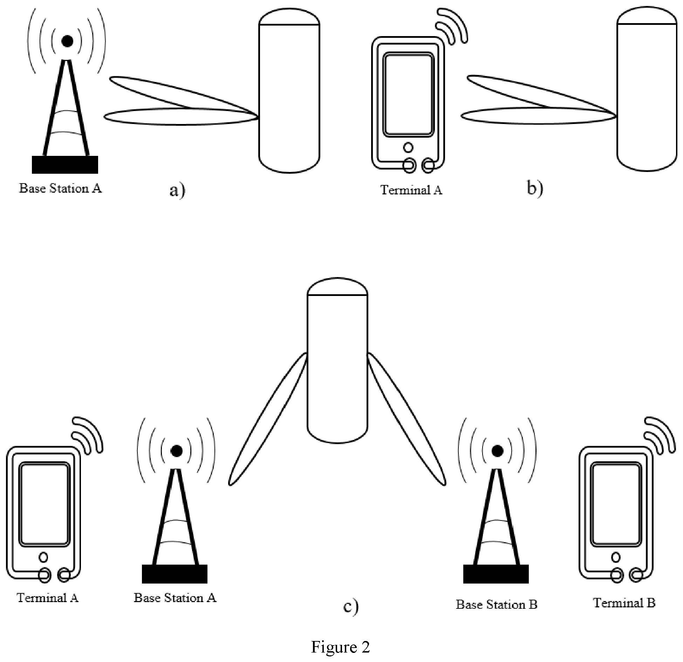

Before providing a detailed description of the measurement method provided in this application, the following first provides a detailed description of the sensing mode to which the method provided in this application is applicable, with reference to Figure 2.

The method provided in this application may be applicable to single-station sensing, that is, the node that sends the reference signal and the node that receives the echo signal are deployed on the same device, such as a base station or a terminal. The method provided in this application may also be applicable to dual-station sensing, that is, the node that sends the reference signal and the node that receives the echo signal are deployed on different devices. For example, a base station sends a reference signal, and a terminal receives an echo signal; or a base station sends a reference signal, and another base station receives an echo signal, and so on.

Figure 2(a) illustrates a scenario of single-station sensing, where, for example, base station A sends a reference signal, and base station A receives an echo signal, which is a signal reflected by the target after the reference signal reaches the target, that is, a scenario where the base station performs sensing.

Figure 2 (b) illustrates another scenario of single-station sensing, where, for example, terminal A transmits a reference signal, and terminal A receives an echo signal, which is a signal reflected by the target after the reference signal reaches the target. This is a scenario where the terminal performs sensing.

Figure 2 (c) shows a scenario of dual-station sensing, for example, base station A transmits a reference signal, and base station B receives an echo signal; or, for example, base station A transmits a reference signal, and terminal B receives an echo signal; or, for example, terminal A transmits a reference signal, and base station B receives an echo signal; or, for example, terminal A transmits a reference signal, and terminal B receives an echo signal, and so on. These scenarios are not exhaustively listed here.

It should be understood that the base station is an example of a network device, and the specific type of the network device is not limited in this application.

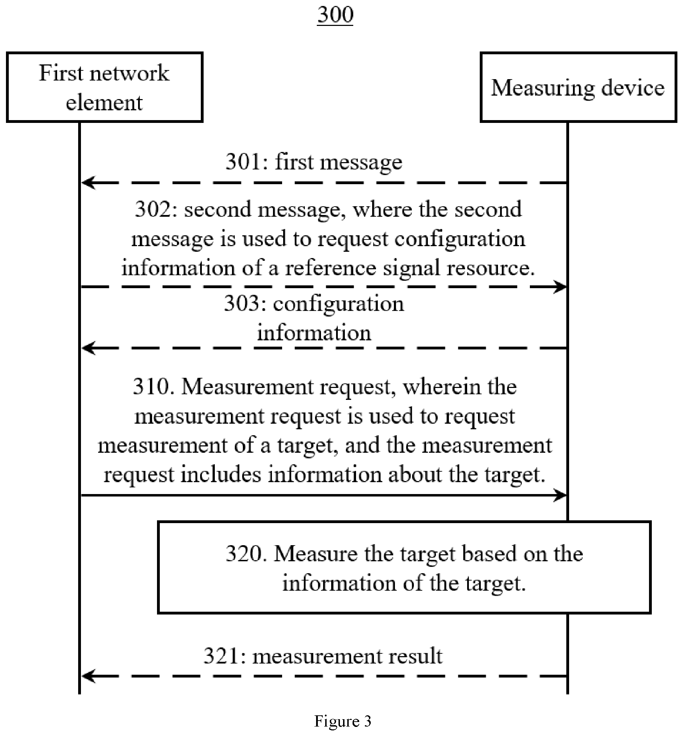

The measurement method provided in this application will be described in detail below with reference to the accompanying drawings. It should be understood that the embodiment illustrated in Figure 3 uses a single-station sensing scenario as an example, but this should not be construed as any limitation on the embodiments of this application. The measurement apparatus may be, for example, a terminal or a base station, and this is not limited in this application.

FIG. 3 is a schematic flowchart of a measurement method 300 according to an embodiment of this application. FIG. 3 describes the method by using interaction between a measurement apparatus and a first network element as an example, which should not constitute any limitation on this application. The measurement apparatus in FIG. 3 may also be replaced with a component (such as a chip, a chip system, a processor, or the like) configured in the measurement apparatus, or a logical module or software that can implement all or some of the functions of the measurement apparatus. The first network element may also be replaced with a component (such as a chip, a chip system, a processor, or the like) configured in the first network element, or a logical module or software that can implement all or some of the functions of the first network element.

In step 310, the first network element sends a measurement request, where the measurement request is used to request measurement of a target, and the measurement request includes information about the target. Correspondingly, the measurement apparatus receives the measurement request from the first network element.

Among them, the first network element may be a network element configured to provide sensing/measurement/detection/positioning functions. The first network element may be deployed on an access network side or on a core network side, which is not limited in this application. For example, the first network element may be an LMF network element or an SMF network element, or may be another type of network element. The specific type of the first network element is not limited in this application.

The aforementioned target refers to an object to be measured. The target may be a passive target, which is an object that cannot actively transmit signals, such as a bridge, a gasoline tank, and so on. The target may also be an active target, which is an object that can actively transmit signals, such as a mobile phone, computer, and so on. When the target is an active target, the measurement device's measurement of the target does not rely on signals actively sent by the target, in other words, the signal used to measure the target is not sent by the target itself. The target may be static, meaning the target's position remains unchanged, or the target may be dynamic, meaning the target's position can change. This application does not impose any limitations on this.

The measurement apparatus mentioned above may be, for example, a terminal or a network device (such as a base station). This application does not limit the specific form of the measurement apparatus.

For example, the first network element sends a measurement request to a base station, where the measurement request is used to request measurement of a target, and the measurement request includes information about the target. Correspondingly, the base station receives the measurement request, and the base station is configured to perform measurement on the target.

In step 320, the measurement device measures the target based on the information of the target.

The measurement of the target as described above may specifically include: the measurement device sends a reference signal and receives an echo signal, where the echo signal is a signal reflected by the target after the reference signal reaches the target. The reference signal is used for measuring the target, or in other words, for sensing/detecting the target, and so on. The reference signal may be, for example, a positioning reference signal (positioning reference signal, PRS), or a sensing reference signal (sensing reference signal, SRS), and the type of the reference signal is not limited in this application.

As an example rather than a limitation, the measurement device may periodically send a reference signal and receive an echo signal, where the reference signal may be used to measure the target. In this way, the measurement device can obtain measurement results of the target at different time points, so that the first network element can perform deformation calculation on the target based on the measurement results at different time points.

Optionally, the information about the target includes information indicating an identifier of the target.

The identifier of the target is used to identify the target, and different identifiers may be used to distinguish different targets.

For example, the identifier of the target may be an index (index) or an identifier (identifier, ID) of the target, or may be a name of the target. This is not limited in this application.

Optionally, the information about the target further includes one or more of the following: information indicating a location of the target; information indicating an orientation or an angle of the target; information indicating a beam direction of a reference signal, where the reference signal is used to measure the target; or information indicating a distance between the target and the measurement apparatus.

The information indicating the location of the target may be, for example, location coordinates of the target, where the location coordinates of the target may be absolute location coordinates or relative location coordinates of the target. This is not limited in this application. The relative location coordinates may be coordinates of the target relative to the measurement apparatus. This is not limited in this application.

For example, taking a Cartesian coordinate system as an example, if the absolute coordinates of the measuring device are (1, 1) and the absolute coordinates of the target are (4, 3), then the position coordinates of the target relative to the measuring device are (3, 2). The position of the target can be indicated by the absolute coordinates (4, 3) or by the relative coordinates (3, 2).

The orientation of the aforementioned target may be an absolute orientation or a relative orientation. The absolute orientation may, for example, be an orientation of the target relative to the measuring device, such as the target being located at an orientation of 30 degrees east by south from the measuring device. The relative orientation may, for example, be an orientation of the target (referred to as Target 1) relative to another target (referred to as Target 2), and this is not limited in this application. For instance, if the measuring device knows the orientation of the target 2 relative to itself, and the relative orientation of Target 1 is, for example, 30 degrees west by south from Target 2, then the measuring device can determine the orientation of Target 1 relative to itself.

The angle of the aforementioned target may be an angle at which the target is relative to a reference direction, or in other words, the angle between the line connecting the target and the measurement device and the reference direction. The reference direction may, for example, be predefined, or may be indicated/configured by the first network element, which is not limited in this application. For instance, the angle between the line connecting the target and the measurement device and the reference direction may be an azimuth (e.g., 50 degrees) of the target relative to the measurement device. In other words, the reference direction may be the due north direction of the measurement device.

The beam direction of the aforementioned reference signal may be a subset of the beam directions supported by the base station. The beam direction of the reference signal may be related to the azimuth or angle of the target. For example, the first network element may determine the beam direction of the reference signal based on the azimuth or angle of the target, and indicate the beam direction of the reference signal to the measurement device. The beam direction of the reference signal and the azimuth or angle of the target may be in a one-to-one correspondence. The beam direction may be indicated based on another reference signal, indicating that the reference signal is sent or received based on the beam of another reference signal being received, or indicating that the reference signal is sent or received based on the beam of another reference signal being transmitted.

The distance between the aforementioned target and the measurement device may be an absolute distance or a relative distance. The absolute distance may, for example, be a distance value (e.g., 50 meters) or a distance range (e.g., 30 to 50 meters) between the target and the measurement device. The relative distance may, for example, be the distance between the target and the measurement device relative to a reference distance, where the reference distance may be, for example, the distance between the measurement device and another target. For instance, if the distance between the measurement device and Target 2 is 50 meters, and the relative distance between the measurement device and Target 1 is 10 meters, then the absolute distance between the measurement device and Target 1 may be, for example, 50 + 10 = 60 meters.

It may be understood that the information about the target is merely an example, and should not constitute any limitation on this application. For example, the information about the target may further include information indicating a reference signal resource, where the reference signal resource may correspond to a beam direction.

Optionally, the information about the target may include one or more of the following: information indicating an identifier of the target, information indicating a location of the target; information indicating an orientation or an angle of the target; or information indicating a beam direction of a reference signal, where the reference signal is used to measure the target; or information indicating a distance between the target and the measurement apparatus.

In other words, the information about the target may further include one or more of the following: information indicating a location of the target; information indicating an orientation or an angle of the target; information indicating a beam direction of a reference signal, where the reference signal is used to measure the target; or information indicating a distance between the target and the measurement apparatus, but does not include information indicating an identifier of the target.

Optionally, before the measurement device receives the measurement request from the first network element, the method 300 further includes step 301: the measurement device sends a first message to the first network element, where the first message indicates one or more of the following: whether the measurement device has the capability to perform measurement, whether the measurement device has the capability to perform deformation detection, the location of the measurement device, the direction of the antenna panel of the measurement device, or the number of antenna elements of the measurement device. Correspondingly, the first network element receives the first message.

The capability of whether the measurement device can perform measurements can be used by the first network element to determine whether to select the measurement device to measure the target.

The capability of whether the deformation detection can be used by the first network element to determine whether to select the measurement device for performing deformation detection.

The location of the measurement device may be used by the first network element to determine which measurement device to select for performing the measurement based on the location of the target and the location of the measurement device.

The direction of the antenna panel of the measurement device may be used by the first network element to determine which measurement device to select for performing the measurement based on the direction of the target and the direction of the antenna panel. Additionally, the first network element may also determine the measurement device for performing the measurement on the target based on the number of antenna elements, for example, the measurement device with a larger number of antenna elements may be selected to perform the measurement on the target.

The first message may be actively reported by the measurement device, or may be reported at the request of the first network element; this is not limited in this application.

For example, the first network element sends a request message to the measurement device, where the request message is used to request the measurement device to report the first message. Correspondingly, the measurement device receives the request message and reports the first message to the first network element.

In another example, the measurement device actively reports the first message to the first network element.

Optionally, before the measurement apparatus receives the measurement request from the first network element, the method 300 further includes steps 302 and 303, where step 302 is that the first network element sends a second message, where the second message is used to request configuration information for a reference signal resource, the reference signal resource is used to transmit a reference signal, and the reference signal is used to measure the target. Correspondingly, the measurement apparatus receives the second message. Step 303 is that the measurement apparatus sends the configuration information. Correspondingly, the first network element receives the configuration information.

The aforementioned configuration information may be used to configure one or more of the following: a time domain resource, a frequency domain resource, a spatial domain resource, and the like. For example, the configuration information includes the period of the reference signal, one or more beam directions, or at least one time-frequency resource. The beam direction of the reference signal indicated in the measurement request by the first network element mentioned above may be a subset of the one or more beam directions mentioned above.

Optionally, the method 300 further includes step 321: the measurement apparatus sends a measurement result to the first network element, where the measurement result is obtained by measuring the target, and the measurement result includes one or more of the following: an identifier of the target, time measurement information, angle measurement information, energy measurement information, or phase measurement information. Correspondingly, the first network element receives the measurement result. The first network element may also perform a deformation calculation on the target based on the measurement result.

Among them, the time measurement information includes but is not limited to: TOA, TDOA, RTT, or RSTD. The angle measurement information includes but is not limited to: AOD or AOA. The energy measurement information includes but is not limited to: RSS. The phase measurement information includes but is not limited to: the phase or phase difference of the reference signal.

It can be understood that the deformation calculation performed by the first network element on the target based on the measurement results can be interpreted as the first network element performing the deformation calculation on the target based on the measurement results reported multiple times by the measurement device. In other words, the first network element can perform the deformation calculation on the target based on the measurement results obtained at different times. For example, the deformation amount of the target may be obtained through the following formula: $deformation amount = \frac{λ}{4 π} ⋅ Δ φ \left(t\right)$, where Δ*φ*(*t*)represents the change value of the phase of the echo signal, and *λ* represents the wavelength corresponding to the phase.Based on the aforementioned technical solution, the measurement device may receive a measurement request from the first network element, where the measurement request is used to request measurement of a target. In other words, the measurement device can determine which target to measure, and further complete the measurement of the target based on the information about the target included in the measurement request, thereby providing a method for measuring a known (or specific) target. Additionally, for the first network element, it facilitates flexible specification of which target to measure.

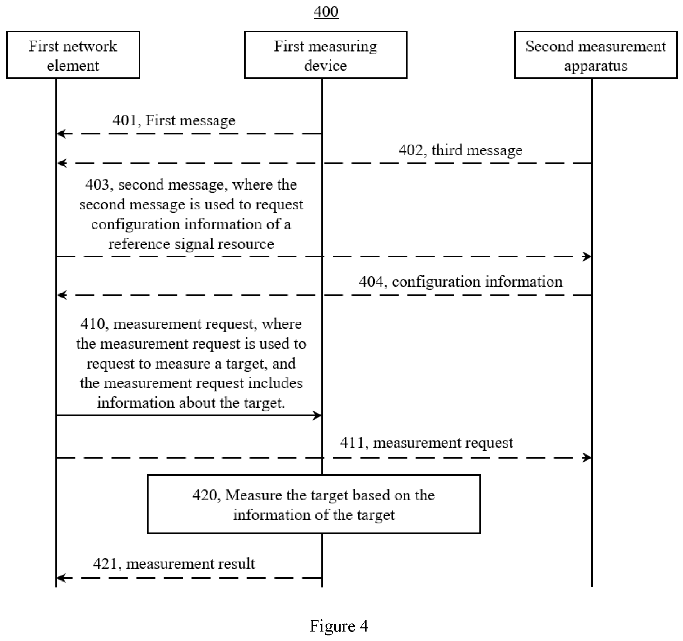

In the embodiment illustrated in Figure 4, a scenario of dual-station awareness is used as an example, but this should not be construed as any limitation on the embodiments of this application. Here, the first measurement device may be, for example, a terminal or a base station, and the second measurement device may also be, for example, a terminal or a base station. This application does not impose any limitations in this regard.

FIG. 4 is a schematic flowchart of a measurement method 400 according to an embodiment of this application. FIG. 4 describes the method by using interaction between a first measurement apparatus, a second measurement apparatus, and a first network element as an example, which should not be construed as any limitation on this application. The first measurement apparatus in FIG. 4 may also be replaced with a component (such as a chip, a chip system, a processor, or the like) configured in the first measurement apparatus, or a logical module or software that can implement all or some of the functions of the first measurement apparatus. The second measurement apparatus may also be replaced with a component (such as a chip, a chip system, a processor, or the like) configured in the second measurement apparatus, or a logical module or software that can implement all or some of the functions of the second measurement apparatus. The first network element may also be replaced with a component (such as a chip, a chip system, a processor, or the like) configured in the first network element, or a logical module or software that can implement all or some of the functions of the first network element.

In step 410, the first network element sends a measurement request to the first measurement device, where the measurement request is used to request measurement of a target, and the measurement request includes information about the target. Correspondingly, the first measurement device receives the measurement request.

Among them, the first measurement device may be an apparatus that receives an echo signal, where the echo signal is a signal reflected by the target after the reference signal reaches the target. The first measurement device may be, for example, a terminal or a network device, and this is not limited in this application.

For an explanation of the first network element and the target, refer to step 310, and no further details will be provided here.

It can be understood that the first measurement device, as an apparatus for receiving echo signals, may determine which target to measure after receiving the measurement request, and obtain information about the target. The information about the target may, for example, be used by the first measurement device to determine on which beam direction to receive the echo signal.

For example, the second measurement apparatus may periodically send a reference signal, and after receiving the measurement request, the first measurement apparatus may receive an echo signal of the reference signal. The second measurement apparatus may send an omnidirectional reference signal, or may send a reference signal in a specific beam direction. For instance, the method 400 further includes step 411: the first network element sends the measurement request to the second measurement apparatus, the second measurement apparatus receives the measurement request, and sends a reference signal based on the information about the target. The second measurement apparatus may determine the beam direction of the reference signal based on the information about the target in the measurement request.

Optionally, the information about the target includes information indicating an identifier of the target.

The identifier of the target is used to identify the target, and different identifiers may be used to distinguish different targets.

For example, the identifier of the target may be an index or an ID of the target, or may be a name of the target. This is not limited in this application.

Optionally, the information about the target further includes one or more of the following: information indicating a location of the target; information indicating an orientation or an angle of the target; or information indicating a beam direction of a reference signal, where the reference signal is used to measure the target; or information indicating a distance between the target and the second measurement apparatus and a distance between the target and the first measurement apparatus.

The information indicating the location of the target may be, for example, location coordinates of the target, where the location coordinates of the target may be absolute location coordinates or relative location coordinates of the target. This is not limited in this application. The relative location coordinates may be, for example, coordinates of the target relative to the second measurement apparatus (or the first measurement apparatus). This is not limited in this application.

For example, using a Cartesian coordinate system as an example, if the absolute coordinates of the second measurement apparatus are (1, 2), and the absolute coordinates of the target are (4, 3), then the coordinates of the position of the target relative to the second measurement apparatus are (3, 1). The position of the target may be indicated by the absolute coordinates (4, 3), or may be indicated by the relative coordinates (3, 1).

The orientation of the target may be an absolute orientation or a relative orientation. The absolute orientation may be, for example, an orientation of the target relative to the second measurement apparatus (or the first measurement apparatus). For example, the target is 30 degrees east of south relative to the second measurement apparatus. The first measurement apparatus may determine the orientation of the target relative to the first measurement apparatus based on the orientation of the target and the orientation of the second measurement apparatus. For another example, the target is 30 degrees west of south relative to the first measurement apparatus.

The relative orientation may be, for example, an orientation of the target (target 1) relative to another target (denoted as target 2). This is not limited in this application. For example, the first measurement apparatus knows an orientation of the target 2 relative to the first measurement apparatus, and the relative orientation of the target 1 is, for example, 30 degrees west of south relative to the target 2. In this case, the first measurement apparatus may determine an orientation of the target 1 relative to the first measurement apparatus.

The angle of the aforementioned target may be an angle of the target relative to the reference direction, or in other words, the angle between the line connecting the target and the second measurement device and the reference direction. The reference direction may, for example, be predefined, or may be indicated/configured by the first network element, which is not limited in this application.

For example, the reference direction is the direction of the line connecting the second measurement device and the first measurement device.

In other words, the angle between the line connecting the target and the second measuring device and the reference direction may be an angle obtained by measuring the direction from the line connecting the second measuring device and the first measuring device (which is used as the reference direction) to the target direction line in a clockwise direction.

The beam direction of the reference signal may be a subset of beam directions supported by the base station. The beam direction of the reference signal may be related to the azimuth or angle of the target. For example, the first network element may determine the beam direction of the reference signal based on the azimuth or angle of the target, and indicate the beam direction of the reference signal to the measurement device. The beam direction of the reference signal and the azimuth or angle of the target may be in a one-to-one correspondence. The beam direction may be indicated based on another reference signal, indicating that the reference signal is sent or received based on the beam for receiving the other reference signal, or indicating that the reference signal is sent or received based on the beam for transmitting the other reference signal.

The foregoing target distance between the second measurement apparatus and the first measurement apparatus may be an absolute distance or a relative distance. The absolute distance may be, for example, a distance value (for example, 50 meters) or a distance range (for example, 30 meters to 50 meters) between the target and the second measurement apparatus and between the target and the first measurement apparatus. For example, the absolute distance is equal to a distance between the target and the second measurement apparatus plus a distance between the target and the first measurement apparatus.

The foregoing relative distance may be, for example, a distance difference between a reflected path and a direct path, where the reflected path is a path through which a reference signal reaches the first measurement apparatus after being reflected by the target, and the direct path is a path through which the reference signal directly reaches the first measurement apparatus.

Optionally, the information about the target may include one or more of the following: information indicating an identifier of the target, information indicating a location of the target; information indicating an orientation or an angle of the target; information indicating a beam direction of a reference signal, where the reference signal is used to measure the target; or information indicating a distance between the target and the measurement apparatus.

In other words, the information about the target may also include one or more of the following items: information indicating the location of the target; information indicating the orientation or angle of the target; information indicating the beam direction of a reference signal, where the reference signal is used to measure the target; or information indicating the distance between the target and the second measurement device and the first measurement device, without including information indicating an identifier of the target.

Optionally, before the first measurement device receives a measurement request from the first network element, the method 400 further includes step 401: sending a first message to the first network element, where the first message indicates one or more of the following: whether the first measurement device has the capability of measurement, whether the first measurement device has the capability of deformation detection, the location of the first measurement device, the direction of the antenna panel of the first measurement device, or the number of antenna elements of the first measurement device. Correspondingly, the first network element receives the first message.

Among them, the first message may be actively reported by the first measurement apparatus, or may be requested to be reported by the first network element, which is not limited in this application.

For a detailed explanation of the first message mentioned above, please refer to the explanation of the first message reported by the measurement device in Figure 3, which will not be elaborated on here.

Optionally, the method 400 further includes step 402: the second measurement device may also report a third message to the first network element, where the third message indicates one or more of the following: whether the measurement capability is available, whether the deformation detection capability is available, the location of the second measurement device, the direction of the antenna panel of the second measurement device, or the number of antenna elements of the second measurement device. For a detailed explanation of the third message mentioned above, please refer to the explanation of the first message reported by the measurement device in Figure 3, which will not be elaborated on here.

Optionally, the method 400 further includes steps 403 and 404, where step 403 involves the first network element sending a second message, wherein the second message is used to request configuration information for a reference signal resource. Correspondingly, the second measurement device receives the second message. Step 404 involves the second measurement device sending the configuration information. Correspondingly, the first network element receives the configuration information.

The aforementioned configuration information may be used to configure one or more of the following: a time domain resource, a frequency domain resource, a spatial domain resource, and the like. For example, the configuration information includes a period of a reference signal, one or more beam directions, or at least one time-frequency resource.

It can be understood that when the apparatus sending the reference signal is a terminal (i.e., the second measurement apparatus is a terminal), the first network element may send a second message to a network device serving the terminal, in order to request the network device to configure a reference signal resource.

In step 420, the first measurement device measures the target based on the information of the target.

The first measurement device measuring the target based on the information of the target may specifically include the first measurement device receiving an echo signal and obtaining a measurement result based on the echo signal.

The second measurement device sends a reference signal in a specific beam direction, or sends an omnidirectional reference signal. Correspondingly, the first measurement device receives an echo signal and obtains a measurement result based on the echo signal.

Optionally, the method 400 further includes step 421: The first measurement device sends a measurement result to the first network element, where the measurement result is obtained by measuring the target, and the measurement result includes one or more of the following: an identifier of the target, time measurement information, angle measurement information, energy measurement information, or phase measurement information. Correspondingly, the first network element receives the measurement result. The first network element may also perform a deformation calculation on the target based on the measurement result. For a detailed description of the measurement result, refer to FIG. 3, and details are not repeated here.

Based on the aforementioned technical solution, the first measurement apparatus may receive a measurement request from the first network element, where the measurement request is used to request measurement of a target. In other words, the first measurement apparatus can determine which target to measure, thereby providing a method for measuring a known (or a specific) target. This means that the first network element can flexibly specify which target to measure.

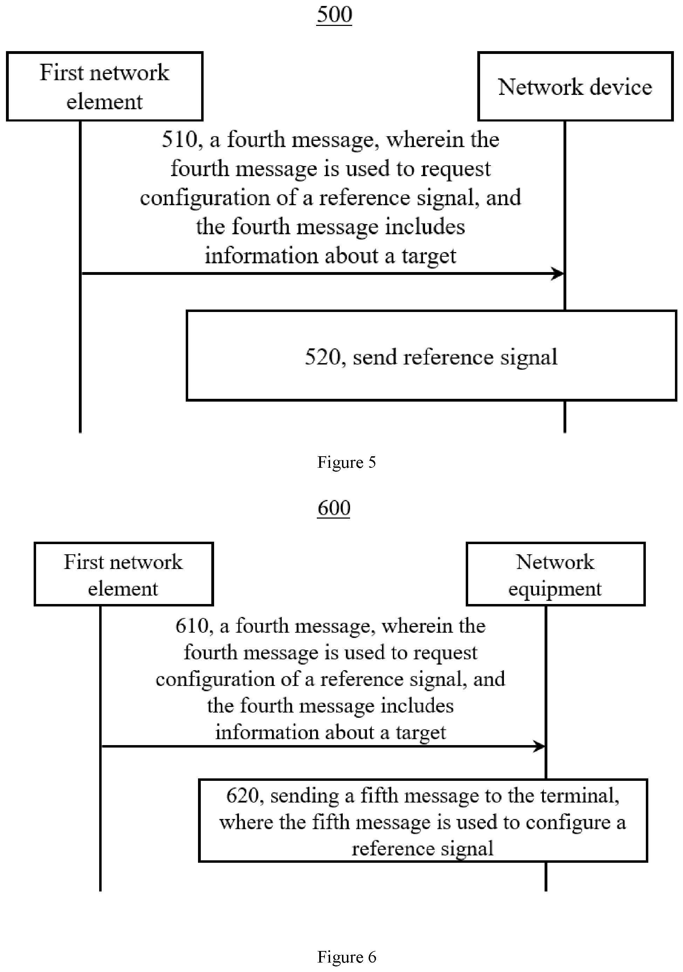

FIG. 5 is a schematic flowchart of a signal transmission method 500 according to an embodiment of this application. FIG. 5 describes the method by using interaction between a network device and a first network element as an example, which should not constitute any limitation on this application. The network device in FIG. 5 may alternatively be replaced with a component (such as a chip, a chip system, a processor, or the like) configured in the network device, or a logical module or software that can implement all or some of the functions of the network device. The first network element may alternatively be replaced with a component (such as a chip, a chip system, a processor, or the like) configured in the first network element, or a logical module or software that can implement all or some of the functions of the first network element.

The method illustrated in Figure 5 can be applied to a single-station sensing scenario, where the network device senses/measure the target, sends a reference signal, and receives an echo signal. The method shown in Figure 5 can also be applied to a dual-station sensing scenario, where the network device sends a reference signal, and another network device or terminal receives the echo signal.

In step 510, the first network element sends a fourth message, which is used to request the configuration of a reference signal, and the fourth message includes information about the target. Correspondingly, the network device receives the fourth message mentioned above. That is, while requesting the configuration of the reference signal, the first network element also indicates the information about the target to the network device, so that the network device can measure the target.

Among them, the information of the target may indicate the beam direction of the reference signal. The fourth message mentioned above, which is used to request the configuration of a reference signal, can also be replaced with the fourth message being used to request the configuration information of the reference signal.

For example, the first network element sends a fourth message to request the configuration of a reference signal, where the fourth message includes information about a target. Correspondingly, the network device receives the fourth message mentioned above and configures the reference signal, or configures a reference signal resource, for example, configuring a time domain resource, a frequency domain resource, and a spatial domain resource for transmitting the reference signal. It can be understood that the network device may configure a resource for the reference signal used to measure the target based on the information about the target, and send the reference signal on the resource mentioned above, in order to measure the target.

Optionally, the information about the target includes information indicating an identifier of the target. For information about the identifier indicating the target, refer to the related descriptions in FIG. 3, and details are not repeated here.

Optionally, the information about the target further includes one or more of the following: information indicating the location of the target; information indicating the orientation or angle of the target; information indicating the beam direction of a reference signal, where the reference signal is used to measure the target; or information indicating the distance between the target and the network device. For a detailed explanation of the above information, refer to FIG. 3, and details are not repeated here.

In step 520, the network device sends a reference signal.

For example, the network device may send a reference signal on a configured reference signal resource.

Optionally, the method 500 further includes: the network device sending a first message to the first network element, where the first message indicates one or more of the following: whether the network device has a measurement capability, whether the network device has a deformation detection capability, a location of the network device, an antenna panel direction of the network device, or a quantity of antenna elements of the network device. Correspondingly, the first network element receives the first message.

The first message mentioned above may be actively reported by the network device, or may be requested to be reported by the first network element; this is not limited in this application. For a detailed explanation of the first message, refer to FIG. 3, and no further details will be provided here.

It can be understood that when the aforementioned network device is both the sender of the reference signal and the receiver of the echo signal, the method 500 further includes: the network device sending a measurement result to the first network element, where the measurement result is obtained by measuring the target, and the measurement result includes one or more of the following: an identifier of the target, time measurement information, angle measurement information, energy measurement information, or phase measurement information. Correspondingly, the first network element receives the measurement result. The first network element may also perform a deformation calculation on the target based on the measurement result.

Based on the aforementioned technical solution, the fourth message used to request the configuration of a reference signal may include information about the target, that is, while requesting the configuration of the reference signal, the first network element indicates the information about the target to the network device, so that the network device can measure the target. Additionally, compared to an additional request for measuring the target, such as sending a measurement request, this approach helps reduce signaling overhead.

FIG. 6 is a schematic flowchart of a signal transmission method 600 according to an embodiment of this application. FIG. 6 describes the method by using an example of interaction between a network device and a first network element, which should not constitute any limitation on this application. The network device in FIG. 6 may also be replaced with a component (such as a chip, a chip system, a processor, or the like) configured in the network device, or a logical module or software that can implement all or some of the functions of the network device. The first network element may be replaced with a component (such as a chip, a chip system, a processor, or the like) configured in the first network element, or a logical module or software that can implement all or some of the functions of the first network element.

The method illustrated in Figure 6 can be applied to a single-station sensing scenario, where the terminal senses/measure the target, that is, the terminal sends a reference signal and receives an echo signal. The method illustrated in Figure 6 can also be applied to a dual-station sensing scenario, where the terminal sends a reference signal, and another network device or terminal receives an echo signal.

In step 610, the first network element sends a fourth message, which is used to request the configuration of a reference signal, and the fourth message includes information about the target. Correspondingly, the network device receives the fourth message. That is, while requesting the configuration of the reference signal, the first network element indicates the information about the target to the network device, so that the network device can measure the target.

Herein, the information about the target may indicate the beam direction of the reference signal. The fourth message mentioned above, which is used to request the configuration of the reference signal, may alternatively be replaced with the fourth message being used to request the configuration information of the reference signal.

For example, the first network element sends a fourth message to request the configuration of a reference signal, where the fourth message includes information about a target. Correspondingly, the network device receives the fourth message and configures the reference signal, or configures a reference signal resource, for example, configuring a time domain resource, a frequency domain resource, and a spatial domain resource for transmitting the reference signal. It can be understood that the network device may configure a resource for the reference signal used to measure the target based on the information about the target, and send the configuration information of the resource for the reference signal to the terminal, so that the terminal can measure the target based on the configuration. Specifically, the terminal may send a reference signal on the configured resource to complete the measurement of the target.

Optionally, the information about the target includes information indicating an identifier of the target. For information about the identifier of the target, refer to the related descriptions in FIG. 3, and details are not described herein again.

Optionally, the information about the target further includes one or more of the following: information indicating a location of the target; information indicating an orientation or an angle of the target; information indicating a beam direction of a reference signal, where the reference signal is used to measure the target; or information indicating a distance between the target and the network device. For detailed explanations of the foregoing information, refer to FIG. 3, and details are not described herein again.

In step 620, the network device sends a fifth message to the terminal, where the fifth message is used to configure a reference signal. Correspondingly, the terminal receives the fifth message.

As an example instead of a limitation, the fifth message may include a time domain resource, a frequency domain resource, a spatial domain resource, or the like used to transmit the reference signal. For example, the fifth message includes a period of the reference signal, one or more beam directions, or at least one time-frequency resource.

For example, the network device sends a fifth message to the terminal, and after receiving the fifth message, the terminal may perform measurement on the target based on the fifth message. For instance, the terminal sends a reference signal and receives an echo signal based on the fifth message. Alternatively, the terminal sends a reference signal based on the fifth message, and another terminal or a network device receives the echo signal. It can be understood that the recipient of the echo signal may also report a measurement result to the first network element, where the measurement result includes one or more of the following: an identifier of the target, time measurement information, angle measurement information, energy measurement information, or phase measurement information. Accordingly, the first network element receives the measurement result. The first network element may also perform a deformation calculation on the target based on the measurement result.

Optionally, the method 600 further includes: the network device sending a first message to the first network element, where the first message indicates one or more of the following: whether the network device has the capability of measurement, whether the network device has the capability of deformation detection, the location of the network device, the direction of the antenna panel of the network device, or the number of antenna elements of the network device. Correspondingly, the first network element receives the first message.

The first message mentioned above may be actively reported by the network device, or may be requested to be reported by the first network element; this is not limited in this application. For a detailed explanation of the first message, refer to FIG. 3, and no further details will be provided here.

Based on the aforementioned technical solution, the fourth message used to request the configuration of a reference signal may include information about the target, that is, while requesting the configuration of the reference signal, the first network element simultaneously indicates the information about the target to the network device. This approach is advantageous in reducing signaling overhead compared to making an additional request for measuring the target, such as by sending a measurement request.

The foregoing provides a detailed description of the method provided in the embodiments of this application with reference to the accompanying drawings. The following provides a detailed description of the apparatus provided in the embodiments of this application with reference to the accompanying drawings.

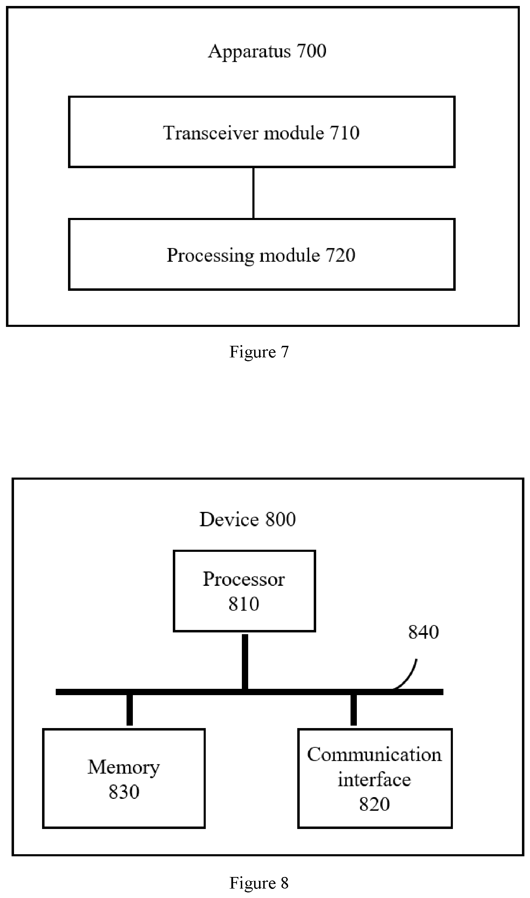

FIG. 7 is a schematic block diagram of an apparatus 700 according to an embodiment of this application.

As shown in FIG. 7, the apparatus 700 includes a transceiver module 710 and a processing module 720. The apparatus 700 may be configured to implement the functions of the measurement apparatus or the first network element in the method embodiment illustrated in FIG. 3, or the apparatus 700 may be configured to implement the functions of the first measurement apparatus, the second measurement apparatus, or the first network element in the method embodiment illustrated in FIG. 4, or the apparatus 700 may be configured to implement the functions of the network device or the first network element in the method embodiment illustrated in FIG. 5 or FIG. 6.

When the apparatus 700 is configured to implement the functions of the measurement apparatus in the method embodiment illustrated in Figure 3, the transceiver module 710 may be configured to receive a measurement request from a first network element, where the measurement request is used to request measurement of a target, and the measurement request includes information about the target; the processing module 720 may be configured to perform measurement on the target based on the information about the target.

Optionally, the information about the target comprises information indicating an identifier of the target.

Optionally, the information about the target further comprises one or more of the following: information indicating a location of the target; information indicating an orientation or an angle of the target; information indicating a beam direction of a reference signal, wherein the reference signal is used to measure the target; or information indicating a distance between the target and the measurement apparatus.

Optionally, the transceiver module 710 may be further configured to: send a first message to the first network element, wherein the first message indicates one or more of the following: whether the measurement capability is available, whether the deformation detection capability is available, a location of the measurement apparatus, a direction of an antenna panel of the measurement apparatus, or a quantity of antenna elements of the measurement apparatus.

Optionally, the transceiver module 710 may also be configured to: receive a second message from the first network element, where the second message is used to request configuration information of a reference signal resource, the reference signal resource is used to transmit a reference signal, and the reference signal is used to measure the target; and send the configuration information to the first network element.

Optionally, the transceiver module 710 may also be configured to: send a measurement result to the first network element, where the measurement result is obtained by measuring the target, and the measurement result includes one or more of the following: an identifier of the target, time measurement information, angle measurement information, energy measurement information, or phase measurement information.

When the apparatus 700 is configured to implement the functions of the first network element in the method embodiment illustrated in Figure 3, the processing module 720 may be configured to generate a measurement request, where the measurement request is used to request measurement of a target, and the measurement request includes information about the target; the transceiver module 710 may be configured to send the measurement request to a measurement apparatus.

Optionally, the information about the target includes information indicating an identifier of the target.

Optionally, the information about the target further includes one or more of the following: information indicating a location of the target; information indicating an orientation or an angle of the target; information indicating a beam direction of a reference signal, where the reference signal is used to measure the target; or information indicating a distance between the target and the measurement apparatus.

Optionally, the transceiver module 710 may be further configured to: receive a first message, where the first message indicates one or more of the following: whether the measurement capability is available, whether the deformation detection capability is available, a location of the measurement apparatus, an antenna panel direction of the measurement apparatus, or a quantity of antenna elements of the measurement apparatus.

Optionally, the transceiver module 710 may be further configured to: send a second message, where the second message is used to request configuration information of a reference signal resource, the reference signal resource is used to transmit a reference signal, and the reference signal is used to measure the target; and receive the configuration information.

Optionally, the transceiver module 710 may also be configured to: receive measurement results, where the measurement results are obtained by measuring the target, and the measurement results include one or more of the following: an identifier of the target, time measurement information, angle measurement information, energy measurement information, or phase measurement information; and the processing module 720 is further configured to perform a deformation calculation on the target based on the measurement results.

When the apparatus 700 is configured to implement the functions of the first measurement apparatus in the method embodiment illustrated in Figure 4, the transceiver module 710 may be configured to receive a measurement request from a first network element, where the measurement request is used to request measurement of a target, and the measurement request includes information about the target; the processing module 720 may be configured to perform measurement on the target based on the information about the target.

Optionally, the information about the target includes information indicating an identifier of the target.

Optionally, the information about the target further comprises one or more of the following: information indicating a location of the target; information indicating an orientation or an angle of the target; information indicating a beam direction of a reference signal, wherein the reference signal is used for measuring the target; or information indicating a distance between the target and a second measurement apparatus and a distance between the target and a first measurement apparatus, wherein the second measurement apparatus is a transmitter of the reference signal.

Optionally, the transceiver module 710 may also be configured to: send a first message to the first network element, where the first message indicates one or more of the following: whether the first measurement apparatus has a measurement capability, whether the first measurement apparatus has a deformation detection capability, a location of the first measurement apparatus, a direction of an antenna panel of the first measurement apparatus, or a quantity of antenna elements of the first measurement apparatus.

Optionally, the transceiver module 710 may also be configured to: send a measurement result to the first network element, where the measurement result is obtained by measuring the target, and the measurement result includes one or more of the following: an identifier of the target, time measurement information, angle measurement information, energy measurement information, or phase measurement information.

When the apparatus 700 is configured to implement the functions of the second measurement apparatus in the method embodiment illustrated in Figure 4, the transceiver module 710 may be configured to receive a second message from a first network element, where the second message is used to request configuration information for a reference signal resource, the reference signal resource is used to transmit a reference signal, and the reference signal is used to measure a target; and send the configuration information to the first network element.

Optionally, the transceiver module 710 may also be configured to: send a third message to the first network element, wherein the third message indicates one or more of the following: whether the capability of measurement is available, whether the capability of deformation detection is available, the location of the second measurement device, the direction of the antenna panel of the second measurement device, or the number of antenna elements of the second measurement device.

Optionally, the transceiver module 710 may also be configured to: receive a measurement request from the first network element, wherein the measurement request is used to request measurement of a target, and the measurement request includes information about the target; and send the reference signal based on the information about the target.

Optionally, the information about the target includes information indicating an identifier of the target.

Optionally, the information about the target further comprises one or more of the following: information indicating a location of the target; information indicating an orientation or an angle of the target; information indicating a beam direction of a reference signal, wherein the reference signal is used for measuring the target; or information indicating a distance between the target and the second measurement device and a distance between the target and the first measurement device.

When the apparatus 700 is configured to implement the functions of the network device in the method embodiment illustrated in Figure 5, the transceiver module 710 may be configured to receive a fourth message from a first network element, where the fourth message is used to request configuration of a reference signal, the fourth message includes information about a target, and the information about the target indicates a beam direction of the reference signal; and transmit the reference signal.

Optionally, optionally, the information about the target includes information indicating an identifier of the target.

Optionally, the information about the target further includes one or more of the following: information indicating a location of the target; information indicating an orientation or an angle of the target; information indicating a beam direction of a reference signal, where the reference signal is used to measure the target; or information indicating a distance between the target and the network device.

Optionally, the transceiver module 710 is further configured to send a first message to the first network element, where the first message indicates one or more of the following: whether the network device has a measurement capability, whether the network device has a deformation detection capability, a location of the network device, an antenna panel direction of the network device, or a quantity of antenna elements of the network device.

When the apparatus 700 is configured to implement the functions of the network device in the method embodiment illustrated in Figure 6, the transceiver module 710 may be configured to receive a fourth message from a first network element, where the fourth message is used to request configuration of a reference signal, and the fourth message includes information about a target, where the information about the target indicates a beam direction of the reference signal; and send a fifth message to a terminal, where the fifth message is used to configure the reference signal.

Optionally, the information about the target includes information indicating an identifier of the target.

Optionally, the information about the target further includes one or more of the following: information indicating a location of the target; information indicating an orientation or an angle of the target; information indicating a beam direction of a reference signal, where the reference signal is used to measure the target; or information indicating a distance between the target and the network device.

Optionally, the transceiver module 710 is further configured to send a first message to the first network element, where the first message indicates one or more of the following: whether the network device has a measurement capability, whether the network device has a deformation detection capability, a location of the network device, an antenna panel direction of the network device, or a quantity of antenna elements of the network device.

When the apparatus 700 is configured to implement the functions of the first network element in the method embodiments illustrated in Figure 5 or Figure 6, the processing module 720 may be configured to generate a fourth message, where the fourth message is used to request configuration of a reference signal, and the fourth message includes information about a target, where the information about the target indicates the beam direction of the reference signal; the transceiver module 710 may be configured to send the fourth message to the network device.

For more detailed descriptions of the above-mentioned modules, one may directly refer to the relevant descriptions provided in the method embodiments illustrated in Figures 3 to 6, and no further elaboration will be given here.

It should be understood that the division into modules in the embodiments of this application is illustrative, and is merely a logical function division; there may be other division methods in actual implementation. In addition, the functional modules in the embodiments of this application may be integrated into one processor, or may exist as separate physical entities, or two or more modules may be integrated into one module. The integrated module may be implemented in the form of hardware, or may be implemented in the form of a software functional module.

FIG. 8 is another schematic block diagram of an apparatus 800 according to an embodiment of this application.

The apparatus 800 may be a chip system, or may be a device configured with a chip system, configured to implement the method described in the foregoing method embodiments. In the embodiments of this application, the chip system may include a chip, or may include a chip and other discrete components.

As shown in FIG. 8, the apparatus 800 may include a processor 810, where the processor 810 may be configured to execute the computer program or instructions in the memory, to implement the steps performed by the first network element in the method embodiment shown in FIG. 3 or the steps performed by the measurement apparatus, or to implement the steps performed by the first network element or the steps performed by the first measurement apparatus or the steps performed by the second measurement apparatus in the method embodiment shown in FIG. 4, or to implement the steps performed by the first network element or the steps performed by the network device in the method embodiment shown in FIG. 5, or to implement the steps performed by the first network element or the steps performed by the network device in the method embodiment shown in FIG. 6.

Optionally, the apparatus 800 further includes a communication interface 820. The communication interface 820 may be configured to communicate with another device through a transmission medium, so that the apparatus 800 can communicate with another device. The communication interface 820 may be, for example, a transceiver, an interface, a bus, a circuit, or an apparatus capable of implementing a receiving and sending function. The processor 810 may input and output data by using the communication interface 820, and is configured to implement the method described in any one of the embodiments corresponding to FIG. 3 to FIG. 6.

Optionally, the apparatus 800 further includes at least one memory 830, configured to store program instructions and/or data. The memory 830 is coupled to the processor 810. The coupling in the embodiments of this application is an indirect coupling or a communication connection between apparatuses, units, or modules, and may be implemented in an electrical, mechanical, or another form, and is used for information exchange between the apparatuses, units, or modules. The processor 810 may operate in collaboration with the memory 830. The processor 810 may execute the program instructions stored in the memory 830. At least one of the at least one memory may be included in the processor.

It should be understood that the coupling in the embodiments of this application is an indirect coupling or a communication connection between apparatuses, units, or modules, and may be implemented in an electrical, mechanical, or another form, and is used for information exchange between the apparatuses, units, or modules. The processor 810 may operate in collaboration with the memory 830. A specific connection medium between the processor 810, the communication interface 820, and the memory 830 is not limited in this embodiment of this application. In this embodiment of this application, the processor 810, the communication interface 820, and the memory 830 are connected through a bus 840 in FIG. 8. The bus 840 is represented by a thick line in FIG. 8. A connection manner between other components is merely an example for description, and is not intended to be limiting. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

This application also provides a computer program product, which includes a computer program (which may also be referred to as code or instructions). When the computer program is executed, it can implement the steps performed by the first network element or the measurement apparatus in the embodiment illustrated in Figure 3, or implement the steps performed by the first network element, the first measurement apparatus, or the second measurement apparatus in the method embodiment illustrated in Figure 4, or implement the steps performed by the first network element or the network device in the method embodiment illustrated in Figure 5, or implement the steps performed by the first network element or the network device in the method embodiment illustrated in Figure 6.

This application also provides a computer-readable storage medium, which stores a computer program (which may also be referred to as code or instructions). When the computer program is executed, it can implement the steps performed by the first network element or the measurement apparatus in the embodiment illustrated in Figure 3, or implement the steps performed by the first network element, the first measurement apparatus, or the second measurement apparatus in the method embodiment illustrated in Figure 4, or implement the steps performed by the first network element or the network device in the method embodiment illustrated in Figure 5, or implement the steps performed by the first network element or the network device in the method embodiment illustrated in Figure 6.

Embodiments of this application provide a communications system, where the system includes the first measurement apparatus and the second measurement apparatus described above.

It should be understood that the processor in embodiments of this application may be an integrated circuit chip that has a signal processing capability. In an implementation process, the steps in the foregoing method embodiments may be implemented by an integrated logic circuit in hardware in the processor or by instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and software modules in the decoding processor. The software module may be located in a mature storage medium in this field, such as a random access memory, a flash memory, a read-only memory, an erasable programmable read-only memory, an electrically erasable programmable memory, or a register. The storage medium is located in the memory, and the processor reads information in the memory, and completes the steps of the foregoing methods in combination with hardware of the processor.

It should also be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described in this specification is intended to include, but not limited to, these and any other memory of suitable types.

The terms "unit," "module," and the like used in this specification may be used to indicate a computer-related entity, hardware, firmware, a combination of hardware and software, software, or software being executed. In the embodiments of this application, the terms "unit" and "module" have the same meaning and may be used interchangeably.

A person of ordinary skill in the art may be aware that, in combination with illustrative logical blocks (illustrative logical block) and steps (step) described in embodiments disclosed in this specification, these functions may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other ways. For example, the foregoing apparatus embodiments are merely examples. For example, the division into units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to actual needs to achieve the objectives of the solutions in embodiments of this application.

In addition, functional units in embodiments of this application may be integrated into one processing unit, each of the units may exist alone physically, or two or more units may be integrated into one unit.

In the foregoing embodiments, functions of the functional units may be implemented completely or partially by software, hardware, firmware, or any combination thereof. When software is used to implement the embodiments, the embodiments may be implemented completely or partially in a form of a computer program product. The computer program product includes one or more computer instructions (programs). When the computer program instructions (programs) are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid state disk (solid state disk, SSD)), or the like.

When the functions are implemented in the form of software functional units and sold or used as an independent product, they may be stored in a computer-readable storage medium. Based on such an understanding, the technical solutions of this application essentially, or the part contributing to the technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.
The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined by the protection scope of the claims.

## Claims

1. A measurement method, applied to a measurement device, the method comprising:
receiving a measurement request from a first network element, wherein the measurement request is used to request measurement of a target, and the measurement request comprises information about the target;
measuring the target based on the information of the target.

2. The method of claim 1, wherein the information about the target comprises information indicating an identifier of the target.

3. The method according to claim 2, wherein the information about the target further comprises one or more of the following:
information indicating a location of the target;
information indicating an orientation or an angle of the target;
information indicating a beam direction of a reference signal; or,
information indicating a distance between the target and the measurement apparatus;
wherein the reference signal is used to measure the target.

4. The method according to any one of claims 1 to 3, wherein the method further comprises:
sending a first message to the first network element, wherein the first message indicates one or more of the following: whether the capability of measurement is available, whether the capability of deformation detection is available, a location of the measurement apparatus, a direction of an antenna panel of the measurement apparatus, or a quantity of antenna elements of the measurement apparatus.

5. The method according to any one of claims 1 to 4, wherein the method further comprises:
receiving a second message from the first network element, wherein the second message is used to request configuration information for a reference signal resource, the reference signal resource is used to transmit a reference signal, and the reference signal is used to measure the target;
sending the configuration information to the first network element.

6. The method according to any one of claims 1 to 5, wherein the method further comprises:
sending the measurement result to the first network element, wherein the measurement result is obtained by measuring the target, and the measurement result comprises one or more of the following: an identifier of the target, time measurement information, angle measurement information, energy measurement information, or phase measurement information.

7. A measurement method, applied to a first network element, wherein the method comprises:
generating a measurement request, wherein the measurement request is used to request measurement of a target, and the measurement request comprises information about the target;
sending the measurement request to the measurement apparatus.

8. The method according to claim 7, wherein the information about the target comprises information indicating an identifier of the target.

9. The method according to claim 8, wherein the information about the target further comprises one or more of the following:
information indicating a location of the target;
information indicating an orientation or an angle of the target;
information indicating a beam direction of the reference signal; or,
information indicating a distance between the target and the measurement apparatus;
where the reference signal is used to measure the target.

10. The method according to any one of claims 7 to 9, wherein the method further comprises:
receiving a first message, wherein the first message indicates one or more of the following: whether the measurement capability is available, whether the deformation detection capability is available, a location of the measurement apparatus, a direction of an antenna panel of the measurement apparatus, or a quantity of antenna elements of the measurement apparatus.

11. The method according to any one of claims 7 to 10, wherein the method further comprises:
sending a second message, wherein the second message is used to request configuration information of a reference signal resource, the reference signal resource is used to transmit a reference signal, and the reference signal is used to measure the target;
receiving the configuration information.

12. The method according to any one of claims 7 to 11, wherein the method further comprises:
receiving a measurement result, wherein the measurement result is obtained by measuring the target, and the measurement result comprises one or more of the following: an identifier of the target, time measurement information, angle measurement information, energy measurement information, or phase measurement information;
performing a deformation calculation on the target based on the measurement results.

13. A measurement method, applied to a first measuring device, the method comprising:
receiving a measurement request from a first network element, wherein the measurement request is used to request measurement of a target, and the measurement request comprises information about the target;
measuring the target based on the information of the target.

14. The method of claim 13, wherein the information about the target comprises information indicating an identifier of the target.

15. The method according to claim 14, wherein the information about the target further comprises one or more of the following:
information indicating a location of the target;
information indicating an orientation or an angle of the target;
information indicating a beam direction of a reference signal; or
information indicating a distance between the target and a second measurement apparatus and a distance between the target and the first measurement apparatus, wherein the second measurement apparatus is a sender of the reference signal;
wherein the reference signal is used to measure the target.

16. The method according to any one of claims 13 to 15, wherein the method further comprises:
sending a first message to the first network element, wherein the first message indicates one or more of the following: whether the capability of measurement is available, whether the capability of deformation detection is available, a location of the first measurement device, a direction of an antenna panel of the first measurement device, or a quantity of antenna elements of the first measurement device.

17. The method according to any one of claims 13 to 16, wherein the method further comprises:
sending a measurement result to the first network element, wherein the measurement result is obtained by measuring the target, and the measurement result comprises one or more of the following: an identifier of the target, time measurement information, angle measurement information, energy measurement information, or phase measurement information.

18. A measurement method, **characterized in that** it is applied to a second measurement device, the method comprising:
receiving a second message from a first network element, wherein the second message is used to request configuration information for a reference signal resource, the reference signal resource is used to transmit a reference signal, and the reference signal is used to measure a target;
sending the configuration information to the first network element.

19. The method of claim 18, wherein before receiving a second message from a first network element, the method further comprises:
sending a third message to the first network element, wherein the third message indicates one or more of the following: whether the capability of measurement is available, whether the capability of deformation detection is available, the location of the second measurement device, the direction of the antenna panel of the second measurement device, or the number of antenna elements of the second measurement device.

20. The method according to claim 18 or 19, wherein after sending the configuration information to the first network element, the method further comprises:
receiving a measurement request from the first network element, wherein the measurement request is used to request measurement of a target, and the measurement request comprises information about the target;
transmitting the reference signal based on the information of the target.

21. The method according to claim 20, wherein the information about the target comprises information indicating an identifier of the target.

22. The method of claim 21, wherein the information about the target further comprises one or more of the following:
information indicating a location of the target;
information indicating an orientation or an angle of the target;
information indicating a beam direction of a reference signal; or
information indicating a distance between the target and the second measurement apparatus and a distance between the target and the first measurement apparatus;
where the reference signal is used to measure the target.

23. A communication system, comprising a first measurement apparatus and a second measurement apparatus, wherein the first measurement apparatus is configured to implement the method according to any one of claims 13 to 17, and the second measurement apparatus is configured to implement the method according to any one of claims 18 to 22.

24. A measurement apparatus, comprising a module configured to implement the method according to any one of claims 1 to 22.

25. A measurement apparatus, comprising a processor and a memory, wherein
the memory is configured to store a computer program;
the processor is configured to invoke the computer program, so that the apparatus implements the method according to any one of claims 1 to 22.

26. A computer-readable storage medium, wherein the storage medium stores a computer program or instructions, and when the computer program or instructions are executed by a computer, the method according to any one of claims 1 to 22 is implemented.

27. A computer program product, wherein the computer program product comprises instructions, and when the instructions are run by a computer, the method according to any one of claims 1 to 22 is implemented.
